# FASCICULE DE BREVET EUROPEEN

(11) **EP 0 631 852 B1**
(45) Date de publication et mention de la délivrance du brevet: **16.10.1996**
(21) Numéro de dépôt: 94401483.6
(22) Date de dépôt: 30.06.1994
(51) Int. Cl.: B25B 27/00, B23P 19/04

(54) **Dispositif de pose d'un joint d'étanchéité**
Vorrichtung zum Anbringen von Dichtungen
Device for placing sealing elements

(30) Priorité: 30.06.1993 FR 9307968
(43) Date de publication de la demande: 04.01.1995
(73) Titulaire: STANDARD PRODUCTS ATLANTIC Société anonyme, F-92400 Courbevoie (FR)
(72) Inventeur: Pike, Harry, Conington Nr Elsworen, Cambridge CB3 8LP (GB); Chardon, Fernand, F-35500 Vitre (FR)
(74) Mandataire: Hasenrader, Hubert

(56) Documents cités:
- EP-A- 0 431 827
- EP-A- 0 497 048
- FR-A- 2 626 805

## Description

La présente invention concerne un dispositif de pose d'un joint d'étanchéité sur un bâti et, plus particulièrement d'un joint armé pourvu d'une pince de fixation de section en U.

Il existe des dispositifs de pose de joints d'étanchéité qui comportent notamment des moyens pour resserrer les branches de ladite pince contre ledit bâti, voir par example EP-A-0 497 048.

Ces moyens pour resserrer les branches de la pince sont constitués de rouleaux en contact d'appui contre la face latérale externe desdites branches pour les rapprocher l'une de l'autre. Ces rouleaux sont disposés de part et d'autre de la pince et avancent de façon régulière le long de la pince en la comprimant latéralement et de façon continue.

Ainsi, ces rouleaux sont en contact d'appui par leur bord d'attaque qui est situé sur une de leurs génératrices.

Dans ce cas, la force de compression s'exerce toujours sur une ligne sensiblement verticale et n'est pas uniformément répartie sur les faces latérales des branches. Il en résulte des déformations incontrôlées et l'apparition de zones de fragilisation ou de cassure qui sont préjudiciables à la qualité de la finition et à l'étanchéité.

Ces phénomènes sont d'autant plus importants que le joint est armé et que son armature possède des parties saillantes.

La présente invention a pour but de résoudre les problèmes techniques précédents.

Ce but est atteint conformément à l'invention au moyen d'un dispositif de pose d'un joint d'étanchéité pourvu d'une pince de fixation de section en U sur un bâti, ledit dispositif comportant notamment des moyens pour resserrer les branches de ladite pince en U contre ledit bâti, caractérisé en ce que lesdits moyens pour resserrer les branches comprennent au moins une mâchoire pourvue d'au moins une face d'appui déplaçable à la fois parallèlement aux branches le long de la pince et dans un plan sensiblement perpendiculaire pour venir en contact par toute sa surface avec la face latérale externe de la branche en regard et déformer cette dernière par une compression régulière et progressive.

Selon une caractéristique avantageuse, le dispositif comporte en outre un rouleau d'avance qui assure le déplacement longitudinal relatif et le guidage de ladite face d'appui parallèlement aux branches par rotation au contact de ladite pince.

Selon une autre caractéristique, ledit rouleau est monté à la partie inférieure du boîtier et est adapté pour rouler sur la partie supérieure du joint.

Selon une variante de réalisation, le dispositif comporte deux faces d'appui disposées symétriquement de part et d'autre de la pince

Selon un mode de réalisation particulier, chaque face d'appui est portée par la face latérale interne d'un patin raccordé à un boîtier dans lequel sont logés les moyens de commande et de contrôle du mouvement dudit patin.

De plus, ledit boîtier est constitué de deux parties assemblées latéralement ; chacune desdites parties étant raccordée à au moins un patin et le dit boîtier comporte une poignée de commande.

Selon une variante, au moins l'une des parties latérales du boîtier est mobile latéralement en translation pour déplacer le patin et sa face d'appui transversalement à la branche en regard.

Selon une autre variante, ledit patin est pivotant dans un plan sensiblement perpendiculaire auxdites branches.

Selon encore une autre variante, ladite face d'appui est constituée d'un coussin fixé au patin et qui est susceptible d'être mis sous pression.

Selon des caractéristiques avantageuses, le dispositif comporte en outre, au moins un organe de maintien constitué d'une tige reliée au boîtier et dont l'extrémité libre est en contact de guidage et de retenue sous le bâti par le biais d'un galet de roulement. Il peut comporter aussi des moyens anti-vibration.

Selon d'autres caractéristiques, ledit patin comporte au moins un galet rotatif par contact avec la branche en regard lors de l'avance dudit patin et les deux parties du boîtier sont pourvues de flasques latéraux démontables.

Par ailleurs, lesdits moyens de commande et de contrôle dudit patin comprennent un moteur et une source d'énergie autonome.

Le dispositif de l'invention comportera de manière avantageuse des moyens d'ajustement de la force de compression exercée par la face d'appui sur la branche en regard en fonction de la résistance mécanique de la pince.

La mâchoire du dispositif de l'invention permet de produire une déformation régulière et progressive des branches de la pince du joint quelle que soit l'épaisseur de la tôle du bâti à l'endroit du montage. De plus, la structure en deux parties du boîtier permet une mise en place aisée du dispositif en amenant la mâchoire ouverte sur le joint.

Il pourra être intégré dans un outil à usage manuel ou embarqué dans un système robotisé.

Le dispositif de l'invention peut être utilisé pour la pose ou le conformage d'un joint à pince armée et/ou encollée sur un bâti de carrosserie automobile, de mobilier ou sur tout autre châssis.

Il pourra avantageusement être associé à un dispositif de mise en place du joint sur le bâti.

La présente invention sera mieux comprise à la lecture de la description qui va suivre, accompagnée des dessins sur lesquels :
- la figure 1 représente une vue en perspective d'un premier mode de réalisation de l'invention ;
- la figure 2 est une vue en coupe transversale du dispositif de la figure 1 ;
- les figures 3A à 3D représentent des vues de dessus du dispositif des figures 1 et 2 pendant son utilisation ;
- la figure 4 représente une vue en perspective d'un second mode de réalisation de l'invention ;
- la figure 5 est une vue en coupe transversale du dispositif de la figure 4 ;
- les figures 6A, 6B et 6C sont des vues de dessus du dispositif des figures 4 et 5 durant son utilisation ;
- les figures 7 et 8 représentent des vues en coupe transversale d'une variante de réalisation du dispositif des figures 4 et 5 ;
- la figure 9 représente une vue en perspective d'un troisième mode de réalisation de l'invention ;
- les figures 10A et 10B représentent des vues en coupe transversale du dispositif de la figure 9 lors de son utilisation ; et,
- les figures 11A et 11B représentent des vues en coupe transversale d'une variante du mode de réalisation de la figure 9.

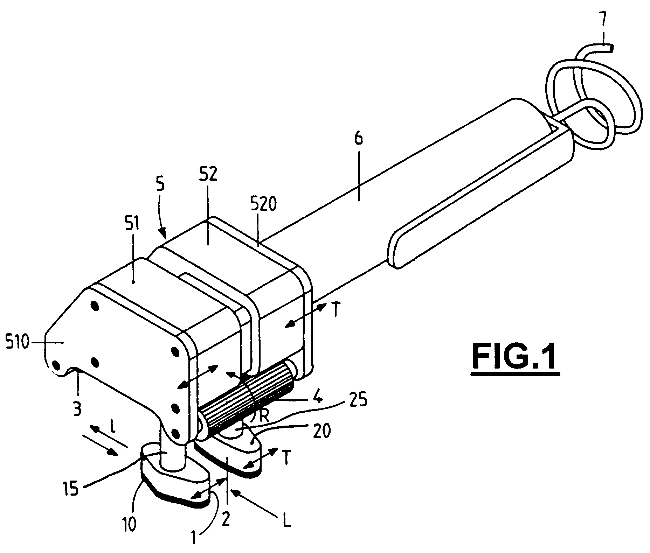

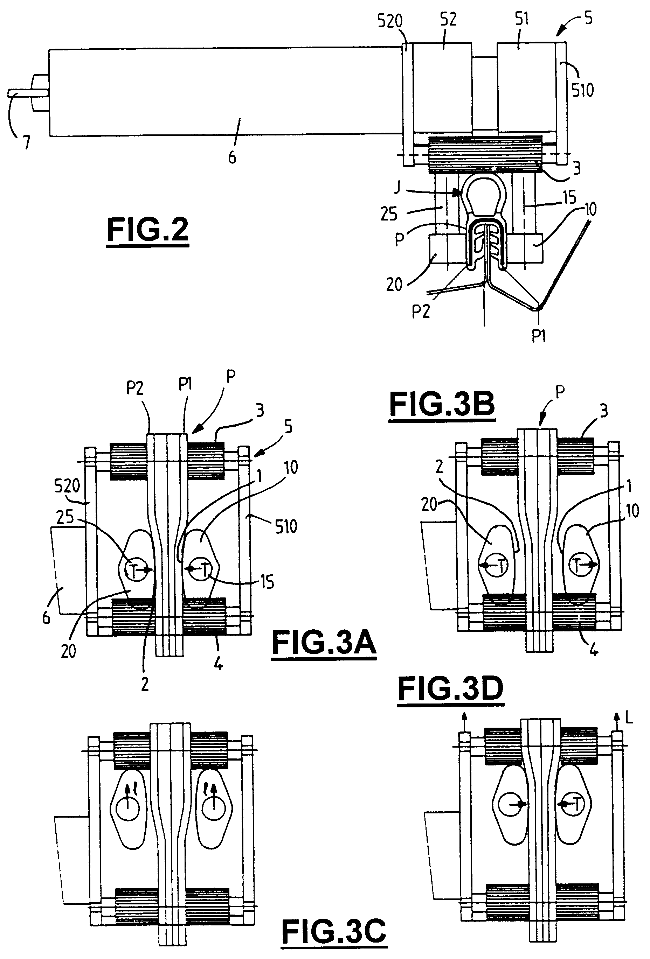

Le dispositif représenté sur les figures 1 et 2 est destiné à effectuer la pose manuelle d'un joint d'étanchéité J sur un bâti de carrosserie B.

Le joint J est pourvu d'une pince P de fixation de section en U avec deux branches P1, P2 qui sont relativement écartées l'une de l'autre puis pré montées sur le bâti B.

Le dispositif de l'invention est destiné à compléter le montage en solidarisant la pince P du joint J avec le bâti B. La fixation définitive est réalisée en rapprochant les branches P1,P2 l'une de l'autre pour les resserrer au contact du bâti B.

Eventuellement, les faces internes des branches P1, P2 seront revêtues d'un adhésif pour renforcer la tenue du joint J sur le bâti B.

A ces fins, le dispositif de l'invention est pourvu d'au moins une mâchoire pourvue d'au moins une face d'appui et, de préférence, deux faces d'appui 1,2 disposées symétriquement de part et d'autre de la pince P.

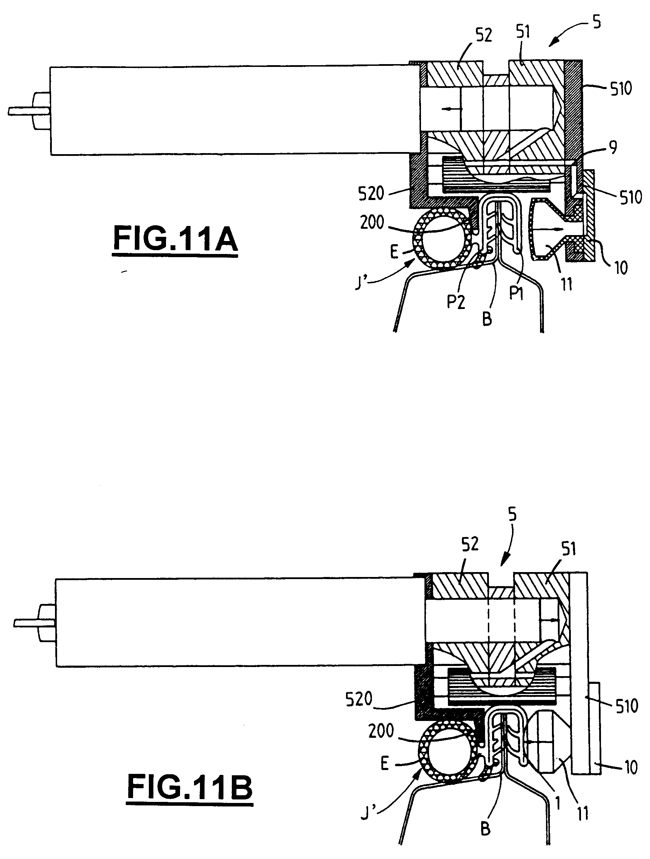

Bien entendu dans certains cas, il sera préférable de prévoir des faces d'appui 1,2 dissymétriques pour les adapter au profil de la pince P (voir notamment figures 11A et 11B).

Les faces d'appui 1,2 sont déplaçables à la fois parallèlement aux branches P1, P2 le long de la pince P dans la direction L et dans un plan sensiblement perpendiculaire aux branches P1, P2 selon la direction T pour venir en contact par toute leur surface avec les faces latérales externes en regard desdites branches P1, P2 de façon à déformer ces dernières par une compression régulière et progressive.

Le déplacement longitudinal relatif L des faces d'appui 1,2 et leur guidage parallèlement aux branches P1,P2 sont assurés de manière discontinue notamment par au moins un et de préférence deux rouleaux d'avance 3,4. Les rouleaux respectivement avant et arrière 3,4 sont montés fou et mis en rotation R par action manuelle ou bien entraînés par une motorisation indépendante.

Selon une variante (non représentée) les moyens de déplacement et de guidage des faces d'appui comprendront un système à flux d'air sustentateur.

Eventuellement, ces moyens seront associés à des moyens anti-vibration telles que des butées (non représentées) de positionnement permettant de maintenir le dispositif et plus particulièrement les faces d'appui dans une position longitudinale déterminée par rapport à la pince P.

La rotation des rouleaux 3,4 au contact de la partie supérieure du joint J entraîne ainsi le guidage et la translation des faces d'appui 1,2 le long de la pince P entre deux phases de compression.

Chaque face d'appui 1,2 est portée par un patin 10,20 raccordé à un boîtier 5 par une tige 15,25 verticale. Dans le boîtier 5 sont logés notamment les moyens de commande et de contrôle des patins 10,20.

Sur les figures 1 et 2, les faces d'appui 12 sont constituées par les faces latérales internes des patins 10,20.

Les faces d'appui 1,2 sont, de préférence, revêtues d'une matière souple, non agressive, qui permet d'éviter la détérioration des branches P1,P2.

Les patins 10,20 sont mobiles longitudinalement par rapport au boîtier 5 en avant et en arrière dans la direction 1 et entre les deux rouleaux 3,4 respectivement avant et arrière.

Le boîtier 5 est constitué de deux parties 51,52 assemblées latéralement qui sont respectivement raccordées à l'un des patins 10,20 par les tiges 15,25.

Au moins l'une des parties 51,52 du boîtier 5 et, de préférence, les deux parties sont mobiles latéralement en translation dans la direction T pour refermer la mâchoire en déplaçant les patins 10,20 et leur face d'appui 1,2 transversalement à la branche P1,P2 en regard.

On peut ainsi rapprocher les faces d'appui 1,2 des faces latérales externes des branches P1,P2 jusqu'à obtenir un effet de compression qui conduit au resserrement des branches de la pince P sur le bâti B.

De manière avantageuse, on pourra régler la position verticale des patins 10,20 en fonction de la hauteur du joint J et de la longueur des branches P1,P2 de la pince P.

Cela sera réalisé, par exemple, en prévoyant que les tiges de support 15,25 soient rétractables verticalement dans le boîtier 5.

Le boîtier 5 est muni d'une poignée de commande 6 comportant éventuellement un câble de liaison 7 avec des organes extérieurs. La poignée 6 constitue un moyen de préhension direct pour l'opérateur ou un bras de liaison avec un système robotisé.

Dans ce dernier cas des moyens de compensation seront implantés à la liaison du dispositif avec le système robotisé pour corriger les différences de position par rapport à la position nominale.

Dans certains cas, la poignée 6 est raccordée au boîtier 5 par l'intermédiaire d'une articulation (non représentée) permettant un débattement de 0 à 360°.

Les parties 51,52 du boîtier sont pourvues de flasques latéraux 510,520 démontables pour accéder aux organes de commande et de contrôle.

Les figures 3A à 3D représentent en vue de dessus le dispositif des figures 1 et 2 lors de son utilisation.

Sur la figure 3A, le boîtier 5 est immobilisé dans la direction L tandis que les parties latérales 51,52 sont rapprochées l'une de l'autre afin de refermer la mâchoire et d'exercer, par le biais des patins 10,20 et des faces d'appui 1,2 une force de compression transversale sur les branches P1,P2.

Cette compression vise à resserrer localement les branches P1, P2 sur le bâti B.

Sur la figure 3B, la phase de compression est terminée. Le boîtier 5 est toujours immobilisé et les parties latérales 51,52 sont écartées l'une de l'autre afin d'ouvrir la mâchoire et d'éloigner les patins 10,20 et leur face d'appui 1,2 de la pince P.

Sur la figure 3C, les patins 10,20 sont déplacés dans la direction l jusqu'à l'avant du boîtier 5 à partir de la position de la figure 3B de façon à ce que leur face d'appui 1,2 se trouve vis-à-vis d'une nouvelle portion de pince à resserrer.

Cette portion se trouve immédiatement adjacente à la portion précédemment resserrée ou bien à distance en fonction des impératifs de montage.

Sur la figure 3D, les patins 10,20 sont à nouveau en phase de compression tandis que le boîtier est déplacé dans la direction L par rotation des rouleaux 3,4 pour revenir dans la position de la figure 3A.

Le travail de compression et le déplacement du dispositif sont donc effectués de manière périodique et discontinue.

La compression des branches P1,P2 est réalisée localement mais par contact de toute la surface des faces d'appui 1,2.

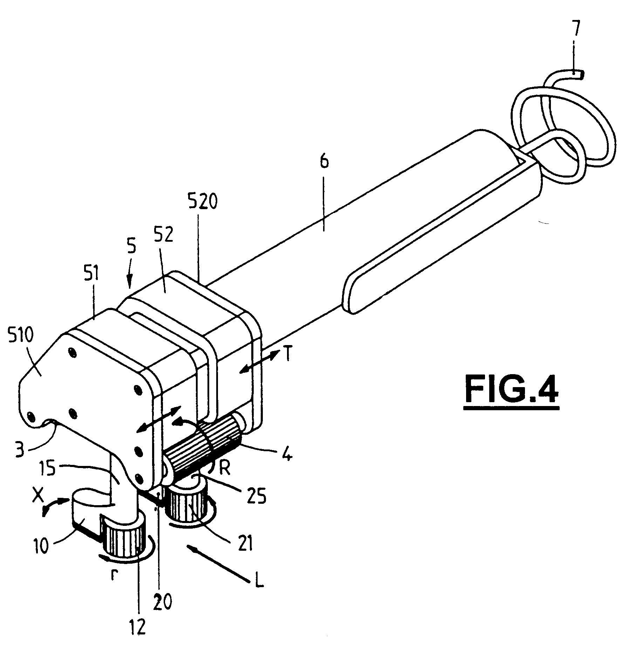

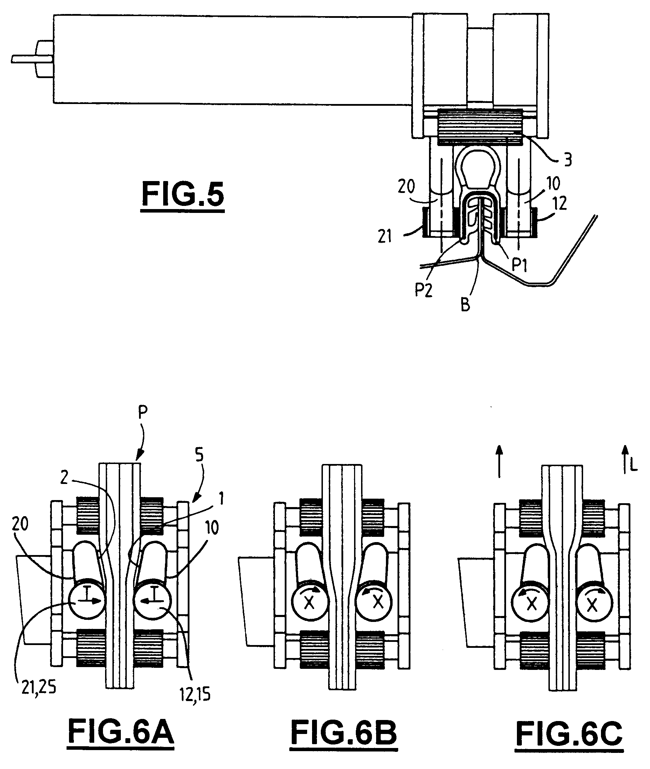

Le dispositif représenté sur les figures 4 et 5 correspond partiellement à celui des figures 1 et 2 à la différence près que les patins 10,20 peuvent également pivoter selon X dans un plan sensiblement perpendiculaire aux branches P1, P2 de façon à pouvoir ajuster avec plus de précision la force de compression des faces d'appui 1,2. Le pivotement des patins s'effectue donc autour d'un axe vertical parallèle à l'axe des tiges 15,25.

Dans ce mode de réalisation, il n'est pas nécessaire de prévoir une mobilité longitudinale des patins 10,20 par rapport au boîtier 5.

Cependant, les patins 10,20 comportent au moins un galet 12,21 qui est mis en rotation par contact avec les faces latérales externes des branches P1,P2 en regard lors de l'avance des patins.

Les galets 12,21 sont montés à l'arrière des patins 10,20 sur un axe vertical qui est confondu avec celui des tiges 12,25.

Les figures 6A à 6C représentent en vue de dessus, le dispositif des figures 4 et 5 lors de son utilisation.

Sur la figure 6A, la mâchoire se referme et les patins 10,20 sont rapprochés de la pince P dans la direction T de façon à ce que seuls les galets rotatifs 12,21 soient au contact des branches P1,P2.

Sur la figure 6B, le boîtier 5 est immobilisé dans la direction L et le travail de compression des faces d'appui 1,2 commence.

La compression est obtenue par pivotement des patins selon X et autour d'un axe vertical parallèle à l'axe de rotation des galets 12,21.

Dans cas, les faces d'appui 1,2 sont constituées de la partie avant des faces latérales internes des patins 10,20.

Sur la figure 6C, le pivotement des patins 10,20 est inversé de façon à écarter les faces d'appui 1,2 des branches P1,P2. Dès que les faces d'appui ont retrouvé la position de la figure 6A, le boîtier 5 est avancé dans la direction L par rotation à la fois des rouleaux 3,4 et des galets 12,21.

Bien entendu, le temps qui s'écoule entre la phase illustrée sur la figure 6A et celle de la figure 6C peut être très court.

Néanmoins, les phases de compression (figure 6B) restent de toute façon locales et discontinues.

Dans un mode de réalisation (non représenté) les patins ne sont pas équipés de galets mais forment un jeu de cames latérales articulées pour pivoter selon un axe vertical dans un plan sensiblement transversal à la pince.

Le débattement des cames est limité par des butées et un organe de rappel (ressort..) maintient les cames au contact des butées.

Le rapprochement des axes verticaux de pivotement des cames provoque la mise en contact d'une portion des faces d'appui des cames avec les branches de la pince.

Puis, le pivotement des cames vers la pince applique progressivement toute la surface développée des faces d'appui contre lesdites branches. L'avance des cames correspond alors à la longueur de la face d'appui développée depuis la mise en contact jusqu'à la fin du pivotement.

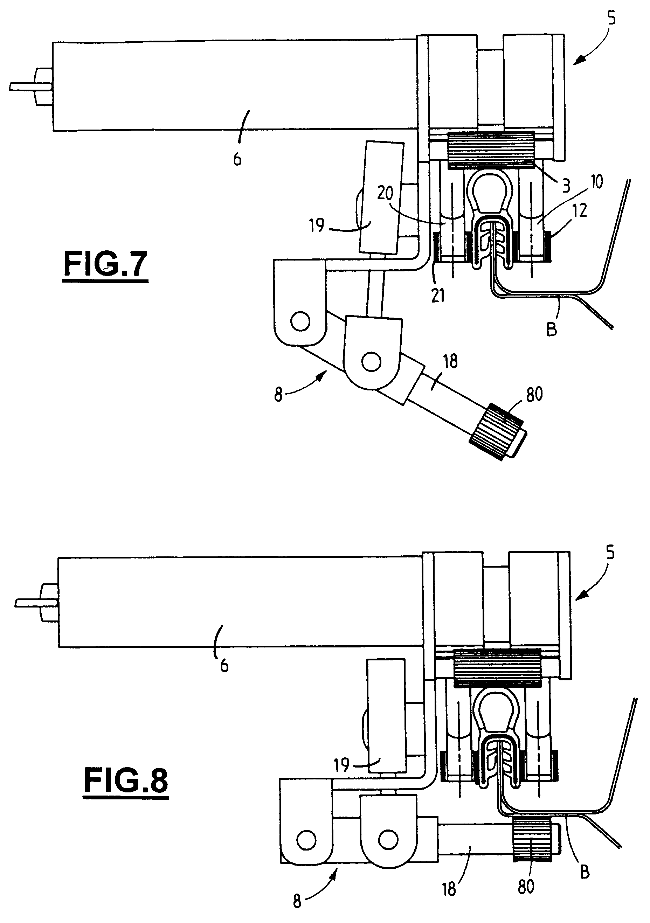

Le dispositif représenté sur les figures 7 et 8 comporte en outre un organe de maintien 8 constitué d'une tige 18 reliée au boîtier 5 et dont l'extrémité libre est en contact de guidage et de retenue sous le bâti B par le biais d'un galet de roulement 80.

La manoeuvre de l'organe de retenue 80 est asservie au système de commande et de contrôle du dispositif par exemple au moyen d'un organe électromécanique 19.

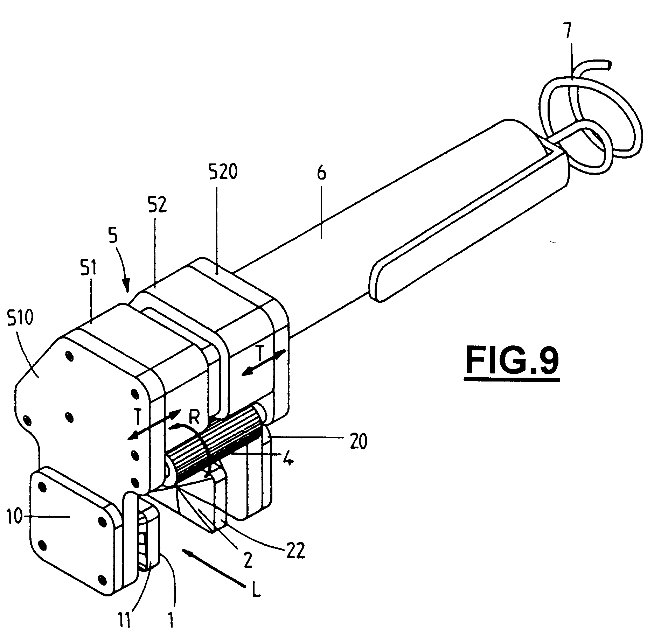

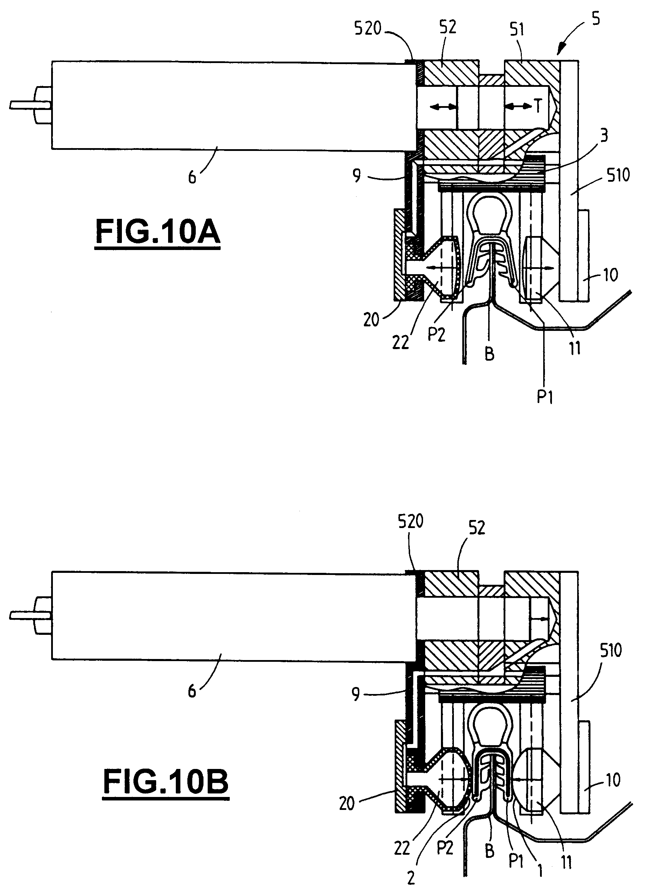

Le dispositif représenté sur les figures 9, 10A et 10B comporte une mâchoire avec des patins 10,20 sur la face interne desquels sont fixés des coussins 11,22 susceptibles d'être remplis par un fluide sous pression pour former sur leurs faces internes des faces d'appui 1,2.

Le fluide sous pression peut être de l'air comprimé, de l'eau, de l'huile ou tout autre fluide équivalent.

Les parties latérales 51,52 du boîtier 5 conservent leur mobilité transversale selon la direction T afin d'obtenir une possibilité supplémentaire d'ajustement des efforts de compression notamment en fonction de la résistance mécanique de la pince P.

Sur les figure 10A les coussins 11,22 sont relâchés et ne sont pas au contact des branches P1, P2 de la pince P.

Sur la figure 10B les coussins 11,22 sont mis sous pression de façon à ce que leurs faces internes formant les faces d'appui 1,2 viennent au contact des branches P1, P2 pour les comprimer.

Le circuit 9 de fluide sous pression est disposé dans sa partie inférieure, à l'intérieur des flasques latéraux 510,520 et dans sa partie supérieure à l'intérieur du boîtier 5.

Les coussins seront éventuellement amovibles afin de pouvoir être remplacés ou réparés.

Les figures 11A et 11B représentent un autre mode de réalisation plus particulièrement adapté aux joints J' à élément d'étanchéité tubulaire E.

Dans ces joints J', la pince P est raccordée latéralement à l'élément tubulaire E de sorte que la mâchoire du dispositif de l'invention ne comporte qu'un seul coussin 11 dont la face interne forme la face d'appui 1 lors de sa mise sous pression au moyen du circuit de fluide 9 notamment en fonction de la résistance mécanique de la pince P.

Pour mieux contrôler la compression des branches P1 et P2 de la pince P, la partie latérale 52 du boîtier 5, symétrique de la partie 51 qui porte le coussin 11, est raccordée par son flasque 520 à un patin 200 qui vient s'insérer entre la branche P2 de la pince P et l'élément tubulaire E.

La patin 200 offre une face d'appui 2 pour les efforts de compression de la face d'appui opposée 1 qui travaille contre la branche symétrique P1.

Pour tous les modes de réalisation précédemment décrits et illustrés, on pourra prévoir des moyens d'ajustement de la force de compression exercée par les faces d'appui 1,2 sur les branches P1,P2 en regard, en fonction de la résistance mécanique de ces dernières.

Ces moyens pourront par exemple comporter des limiteurs du couple exercé par la mâchoire ou bien un système provoquant l'écartement automatique des faces d'appui 1,2 de la mâchoire lorsque la force de compression atteint une valeur prédéterminée.

Par ailleurs, les dimensions, les profils et les courses de déplacement des faces d'appui 1,2 seront déterminés en fonction des caractéristiques respectives de la pince P et du bâti B.

## Revendications

1. Dispositif de pose d'un joint d'étanchéité (J) pourvu d'une pince de fixation (P) de section en U sur un bâti (B) de carrosserie, ledit dispositif comportant notamment des moyens pour resserrer les branches (P1,P2) de ladite pince (P) en U contre ledit bâti, caractérisé en ce que lesdits moyens pour resserrer les branches comprennent au moins une mâchoire (10,20) pourvue d'au moins une face d'appui (1,2) déplaçable à la fois parallèlement aux branches (P1,P2) le long de la pince (P) et dans un plan sensiblement perpendiculaire pour venir en contact par toute sa surface avec la face latérale externe de la branche en regard et déformer cette dernière par une compression régulière et progressive.

2. Dispositif selon la revendication 1, caractérisé en ce qu'il comporte au moins un rouleau d'avance (3,4) qui assure le déplacement longitudinal relatif et le guidage de ladite face d'appui (1,2) parallèlement aux branches (P1,P2) par rotation au contact de ladite pince (P).

3. Dispositif selon l'une des revendications précédentes, caractérisé en ce qu'il comporte deux faces d'appui (1,2) disposées symétriquement de part et d'autre de la pince (P).

4. Dispositif selon l'une des revendications précédentes, caractérisé en ce que chaque face d'appui (1,2) est portée par la face latérale interne d'un patin (10,20) raccordé à un boîtier (5) dans lequel sont logés les moyens de commande et de contrôle du mouvement dudit patin.

5. Dispositif selon la revendication 4, caractérisé en ce que ledit boîtier (5) est constitué de deux parties (51,52) assemblées latéralement ; chacune desdites parties étant raccordée à au moins un patin (10,20).

6. Dispositif selon les revendications 2 et 5 caractérisé en ce que ledit rouleau (3,4) est monté à la partie inférieure du boîtier (5) et est adapté pour rouler sur la partie supérieure du joint (J).

7. Dispositif selon l'une des revendications 4 à 6, caractérisé en ce que ledit boîtier (5) comporte une poignée de commande (6).

8. Dispositif selon l'une des revendications 4 à 7, caractérisé en ce qu'au moins l'une des parties latérales (51,52) du boîtier (5) est mobile latéralement en translation pour déplacer le patin (10,20) et sa face d'appui (1,2) transversalement à la branche (P1,P2) en regard.

9. Dispositif selon l'une des revendications 4 à 8, caractérisé en ce que ledit patin (10,20) est mobile longitudinalement par rapport au boîtier (5).

10. Dispositif selon les revendications 2 et 9, caractérisé en ce qu'il comporte deux rouleaux d'avance (3,4) situés respectivement à l'avant et à l'arrière du boîtier (5) ; ledit patin (10,20) étant mobile entre les deux rouleaux (3,4).

11. Dispositif selon l'une des revendications précédentes, caractérisé en ce qu'il comporte en outre, au moins un organe de maintien (8) constitué d'une tige (18) reliée au boîtier (5) et dont l'extrémité libre est en contact de guidage et de retenue sous le bâti (B) par le biais d'un galet de roulement (80).

12. Dispositif selon l'une des revendications 4 à 11, caractérisé en ce que ledit patin (10,20) est pivotant dans un plan sensiblement perpendiculaire auxdites branches (P1, P2).

13. Dispositif selon l'une des revendications 4 à 12, caractérisé en ce que ledit patin (10,20) comporte au moins un galet (12,21) rotatif par contact avec la branche (P1,P2) en regard lors de l'avance dudit patin.

14. Dispositif selon l'une des revendications 4 à 13, caractérisé en ce que ladite face d'appui (1,2) est constituée d'un coussin fixé au patin (10,20) et qui est susceptible d'être mis sous pression.

15. Dispositif selon l'une des revendications 5 à 14, caractérisé en ce que les deux parties (51,52) du boîtier (5) sont pourvues de flasques latéraux (510,520) démontables.

16. Dispositif selon l'une des revendications précédentes, caractérisé en ce qu'il comporte en outre des moyens anti-vibration.

17. Dispositif selon l'une des revendications précédentes, caractérisé en ce qu'il comporte en outre des moyens d'ajustement de la force de compression exercée par la face d'appui (1,2) sur la branche (P1,P2) en regard en fonction de la résistance mécanique de la pince (P).

18. Dispositif selon l'une des revendications précédentes, caractérisé en ce que les dimensions, le profil et la course de la face d'appui (1,2) sont déterminés en fonction de la géométrie de la pince (P) et de celle du bâti (B) de carrosserie.

19. Dispositif selon l'une des revendications 4 à 18, caractérisé en ce que lesdits moyens de commande et de contrôle dudit patin (10,20) comprennent un moteur et une source d'énergie autonome.

20. Dispositif selon l'une des revendications 7 à 19, caractérisé en ce que la poignée de commande (6) est raccordée au boîtier (5) par l'intermédiaire d'une articulation permettant un débattement de 0 à 360°.

21. Utilisation du dispositif selon l'une des revendications 1 à 19 dans un système robotisé.

## Claims

1. A device for fitting a seal (J), provided with a fastening clamp (P) having a U-shaped cross section, to a bodywork frame (B), said device comprising, in particular, means for tightening the branches (P1, P2) of said U-shaped clamp (P) against said frame, characterised in that said means for tightening the branches comprise at least one jaw (10, 20) provided with at least one bearing face (1, 2) which can be displaced both parallel to the branches (P1, P2) along the clamp (P) and in a substantially perpendicular plane so as to come into contact, over its whole surface, with the outer lateral face of the branch facing it and so as to deform the latter by regular and progressive compression.

2. A device according to Claim 1, characterised in that it comprises at least one feed roller (3, 4) which procures the relative longitudinal displacement and the guiding of said bearing face (1, 2) parallel to the branches (P1, P2) by rotation in contact with said clamp (P).

3. A device according to one of the preceding claims, characterised in that it comprises two bearing faces (1, 2) arranged symmetrically on either side of the clamp (P).

4. A device according to one of the preceding claims, characterised in that each bearing face (1, 2) is carried by the inner lateral face of a shoe (10, 20) connected to a housing (5) in which the means for controlling and monitoring the movement of said shoe are housed.

5. A device according to Claim 4, characterised in that said housing (5) is constituted by two parts (51, 52) assembled side by side; each of said parts being connected to at least one shoe (10, 20).

6. A device according to Claims 2 and 5, characterised in that said roller (3, 4) is mounted on the lower part of the housing (5) and is adapted to roll over the upper part of the seal (J).

7. A device according to one of Claims 4 to 6, characterised in that said housing (5) comprises a control handle (6).

8. A device according to one of Claims 4 to 7, characterised in that at least one of the lateral parts (51, 52) of the housing (5) is movable laterally in translation so as to displace the shoe (10, 20) and its bearing face (1, 2) transversely to the branch (P1, P2) facing it.

9. A device according to one of Claims 4 to 8, characterised in that said shoe (10, 20) is movable longitudinally relative to the housing (5).

10. A device according to Claims 2 and 9, characterised in that it comprises two feed rollers (3, 4) located respectively in front of and behind the housing (5); said shoe (10, 20) being movable between the two rollers (3, 4).

11. A device according to one of the preceding claims, characterised in that it further comprises at least one holding body (8) constituted by a rod (18) connected to the housing (5) and having its free end in contact, for the purposes of guiding and holding, under the frame (B) by means of a roller wheel (80).

12. A device according to one of Claims 4 to 11, characterised in that said shoe (10, 20) is pivotable in a plane substantially perpendicular to said branches (P1, P2).

13. A device according to one of Claims 4 to 12, characterised in that said shoe (10, 20) comprises at least one roller wheel (12, 21) rotatable by contact with the branch (P1, P2) facing it when said shoe is moved forward.

14. A device according to one of Claims 4 to 13, characterised in that said bearing face (1, 2) is constituted by a pad fixed to the shoe (10, 20) which is capable of being put under pressure.

15. A device according to one of Claims 5 to 14, characterised in that the two parts (51, 52) of the housing (5) are provided with removable side flanges (510,520).

16. A device according to one of the preceding claims, characterised in that it further comprises anti-vibration means.

17. A device according to one of the preceding claims, characterised in that it further comprises means for adjusting the compression force exerted by the bearing face (1, 2) on the branch (P1, P2) facing it, as a function of the mechanical strength of the clamp (P).

18. A device according to one of the preceding claims, characterised in that the dimensions, profile and course of the bearing face (1, 2) are determined as a function of the geometry of the clamp (P) and that of the bodywork frame (B).

19. A device according to one of Claims 4 to 18, characterised in that said means for controlling and monitoring said shoe (10, 20) comprise a motor and an independent power source.

20. A device according to one of Claims 7 to 19, characterised in that the control handle (6) is connected to the housing (5) via an articulation allowing clearance of between 0 and 360°.

21. Use of the device according to one of Claims 1 to 19 in a robot-operated system.

## Patentansprüche

1. Vorrichtung zum Anbringen von Dichtungen (J) mit einer Befestigungsklemme (P) mit U-förmigem Querschnitt an einem Tragelement (B) eines Aufbaus, wobei die Vorrichtung besonders eine Einrichtung zum Klemmen der Schenkel (P1, P2) der U-förmigen Klemme (P) gegen die Halterung enthält,
dadurch **gekennzeichnet,** daß die Einrichtung zum Klemmen der Schenkel mindestens eine Klemmbacke (10, 20) aufweist, die mit mindestens einer Abschnittsfläche (1, 2) versehen ist, die gleichzeitig parallel zu den Schenkeln (P1, P2) entlang der Klemme (P) und in einer im wesentlichen senkrecht hierzu verlaufenden Ebene verstellbar ist, damit sie über die gesamte Oberfläche in Kontakt zu der äußeren Seitenwand des gegenüberliegenden Schenkels gelangen und diesen mit einem gleichmäßigen und zunehmenden Druck verformen.

2. Vorrichtung nach Anspruch 1,
dadurch **gekennzeichnet,** daß sie mindestens eine Vorrückwalze (3, 4) enthält, die die Relativverschiebung in Längsrichtung gewährleistet sowie die Führung der Anlagefläche (1, 2) parallel zu den Schenkein (P1, P2), und zwar durch Drehung in Kontakt zu der Klemme (P).

3. Vorrichtung nach einem der vorhergehenden Ansprüche,
dadurch **gekennzeichnet,** daß sie zwei Anlageflächen (1, 2) enthält, die symmetrisch zueinander und zu der Klemme (P) angeordnet sind.

4. Vorrichtung nach einem der vorhergehenden Ansprüche,
dadurch **gekennzeichnet,** daß jede Anlagefläche (1, 2) durch die innere Seitenwand eines Tragsegments (10, 20) getragen ist, das mit einem Gehäuse (5) verbunden ist, in dem die Einrichtungen zum Befehlen und Steuern der Bewegung des Tragsegments aufgenommen sind.

5. Vorrichtung nach Anspruch 4,
dadurch **gekennzeichnet,** daß das Gehäuse (5) aus zwei seitlich miteinander verbundenen Teilen (51, 52) gebildet ist und daß jedes dieser Teile mit mindestens einem Tragsegment (10, 20) verbunden ist.

6. Vorrichtung nach den Ansprüchen 2 und 5,
dadurch **gekennzeichnet,** daß die Walze (3, 4) im inneren Teil des Gehäuses (5) montiert und so ausgebildet ist, daß sie auf dem oberen Teil der Dichtung (J) abrollt.

7. Vorrichtung nach einem der Ansprüche 4 bis 6,
dadurch **gekennzeichnet,** daß das Gehäuse (5) einen Bediengriff (6) enthält.

8. Vorrichtung nach einem der Ansprüche 4 bis 7,
dadurch **gekennzeichnet,** daß zumindest eines der Seitenteile (51, 52) des Gehäuses (5) während der Verschiebung seitlich beweglich ist, damit das Tragsegment (10, 20) und dessen Anlagefläche (1, 2) eher zum gegenüberliegenden Schenkel (P1, P2) verstellbar sind.

9. Vorrichtung nach einem der Ansprüche 4 bis 8,
dadurch **gekennzeichnet,** daß das Tragelement (10, 20) in Bezug auf das Gehäuse (5) der Länge nach beweglich ist.

10. Vorrichtung nach den Ansprüchen 2 und 9,
dadurch **gekennzeichnet**, daß es zwei Vorschubrollen (3, 4) enthält, die jeweils vor und hinter dem Gehäuse (5) angeordnet sind und daß das Tragelement (10, 20) zwischen den beiden Walzen (3, 4) beweglich ist.

11. Vorrichtung nach einem der vorhergehenden Ansprüche,
dadurch **gekennzeichnet,** daß sie zusätzlich mindestens eine Bedieneinrichtung (8) enthält, bestehend aus einer mit dem Gehäuse (5) verbundenen Stange (18), deren freies Ende in Kontakt zu der Führung (B) gelangt, und der unterhalb desselben durch das Schräglaufen einer Laufrolle (80) gehalten ist.

12. Vorrichtung nach einem der Ansprüche 4 bis 12,
dadurch **gekennzeichnet,** daß das Tragelement (10, 20) in einer im wesentlichen senkrecht zu den Schenkeln (P1, P2) verlaufenden Ebene verschwenkbar ist.

13. Vorrichtung nach einem der Ansprüche 4 bis 12,
dadurch **gekennzeichnet**, daß das Tragelement (10, 20) mindestens eine Reibrolle (12, 21) enthält, die bei Kontakt mit dem Schenkel (P1, P2) während des Fortschreitens des Tragelements drehbar ist.

14. Vorrichtung nach einem der Ansprüche 4 bis 13,
dadurch **gekennzeichnet,** daß die Anlagefläche (1, 2) aus einem an dem Tragelement (10, 20) befestigten Puffer gebildet ist, der unter Druck gesetzt werden kann.

15. Vorrichtung nach einem der Ansprüche 5 bis 14,
dadurch **gekennzeichnet,** daß die beiden Teile (51, 52) des Gehäuses (5) mit demontierbaren seitlichen Flanschen (510, 520) versehen sind.

16. Vorrichtung nach einem der vorhergehenden Ansprüche,
dadurch **gekennzeichnet,** daß sie zusätzlich Dämpfungseinrichtungen enthält.

17. Vorrichtung nach einem der vorhergehenden Ansprüche,
dadurch **gekennzeichnet,** daß sie zusätzlich Angleicheinrichtungen für die Druckkraft aufweist, die über die Abstützfläche (1, 2) über den Schenkel (P1, P2) abhängig von der Beständigkeit der Befestigungsklemme (P) ausgeübt wird.

18. Vorrichtung nach einem der vorhergehenden Ansprüche,
dadurch **gekennzeichnet,** daß die Abmessungen, das Profil und der Lauf der Anlagefläche (1, 2) abhängig von der Geometrie der Klemme (P) und derjenigen des Tragelementaufbaus (B) gewählt sind.

19. Vorrichtung nach einem der Ansprüche 4 bis 18,
dadurch **gekennzeichnet,** daß die Befehls- und Steuereinrichtung des Tragsegments (10, 20) einen Motor und eine selbständige Energiequelle enthalten.

20. Vorrichtung nach einem der Ansprüche 7 bis 19,
dadurch **gekennzeichnet,** daß der Bediengriff (6) durch Zwischenschaltung eines Gelenks verbunden ist, das eine Ausfederung von 0 bis 360° ermöglicht.

21. Verwendung der Vorrichtung gemäß einem der Ansprüche 1 bis 19 in einem Robotersystem.
